# EUROPÄISCHE PATENTSCHRIFT

(11) **EP 3 235 592 B1**
(45) Veröffentlichungstag und Bekanntmachung des Hinweises auf die Patenterteilung: **19.09.2018**
(21) Anmeldenummer: 16165935.4
(22) Anmeldetag: 19.04.2016
(51) Int. Cl.: B23Q 7/10, A47B 55/04, A47B 57/48, A47B 96/06

(54) **REGALSPEICHEREINHEIT UND AUTOMATIONSANLAGE**
SHELF MEMORY UNIT AND AUTOMATION INSTALLATION
BLOC D'ETAGERES DE RANGEMENT ET SYSTEME D'AUTOMATION

(43) Veröffentlichungstag der Anmeldung: 25.10.2017
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, 78598 Königsheim (DE); Dietmann, Michael, 72379 Hechingen (DE); Bille, Frank, 78559 Gosheim (DE)
(74) Vertreter: Patentanwälte Magenbauer & Kollegen Partnerschaft mbB

(56) Entgegenhaltungen:
- EP-A1- 1 733 840
- FR-A1- 2 644 336
- FR-A1- 2 803 728

## Beschreibung

Die Erfindung betrifft eine Regalspeichereinheit zur Verwendung in einer Automationsanlage für eine Speicherung von Werkstücken und/oder Werkstückpaletten und/oder Werkzeugen, mit einem Grundgestell, das einen Regalständer und zwei beabstandet zueinander angeordnete Regalseitenteile umfasst, wobei einander zugewandte Oberflächen der Regalseitenteile mit Schnittstellen zur Anbringung von Ablagevorrichtungen ausgebildet sind. Ferner betrifft die Erfindung eine Automationsanlage mit wenigstens einer derartigen Regalspeichereinheit.

Automationsanlagen werden zum automatischen Wechsel von Werkstücken und/oder Werkstückpaletten und/oder Werkzeugen an Bearbeitungsmaschinen wie beispielsweise Mehrachs-Bearbeitungszentren, insbesondere Fräs- und/oder Drehzentren, verwendet und verfügen über eine Regalspeichereinheit mit Regalfächern mit einer Vielzahl von Ablageplätzen für Werkstücke und/oder Werkstückpaletten und/oder Werkzeuge. Ferner umfasst eine Automationsanlage einen Manipulator, beispielsweise einen Industrieroboter zur Bewegung der Werkstücke und/oder Werkstückpaletten und/oder Werkzeuge zwischen der Regalspeichereinheit und der Bearbeitungsmaschine.

Aus der DE 33 20 762 A1, der EP 1 733 840 A1, der DE 10 2009 040 811 A1 und der US 3 643 814 A sind Regalspeichereinheiten bekannt, die als Metallteil- oder Betonfertigteil-Konstruktionen aus vielen Einzelteilen aufgebaut sind, wobei sich Fertigungstoleranzen in den Abmaßen der Einzelteile bei der Montage zur Regalspeichereinheit addieren, so dass jeder Ablageplatz einzeln ausgerichtet und vermessen werden muss, um eine präzise automatisierte Be- und Entladung der Ablageplätze zu ermöglichen.

Die FR 2 644 336 offenbart eine Regalspeichereinheit, mit zwei beabstandet zueinander angeordneten Regalseitenteilen, wobei einander zugewandte Oberflächen der Regalseitenteile mit Schnittstellen zur Anbringung von Ablagevorrichtungen ausgebildet sind, wobei die Regalseitenteilen aus Kunststein hergestellt ist und wobei die Schnittstellen als separat ausgebildete Einsatzteile stoffschlüssig in den einander zugewandten Oberflächen der Regalseitenteile aufgenommen sind.

Die Aufgabe der Erfindung besteht darin, eine Regalspeichereinheit sowie eine Automationsanlage bereitzustellen, die kostengünstig mit hoher Präzision hergestellt werden können. Diese Aufgabe wird für eine Regalspeichereinheit der eingangs genannten Art mit den Merkmalen des Anspruchs 1 gelöst. Erfindungsgemäß ist vorgesehen, dass das Grundgestell als einstückiger Gusskörper aus Kunststein hergestellt ist und dass die Schnittstellen als separat ausgebildete Einsatzteile stoffschlüssig in den einander zugewandten Oberflächen der Regalseitenteile aufgenommen sind.

Aufgrund der Gestaltung des Grundgestells als einstückiger Gusskörper aus Kunststein werden alle für eine präzise Anordnung der Werkstücke und/oder Werkstückpaletten und/oder Werkzeuge in der Regalspeichereinheit erforderlichen Bezugsflächen und Bezugsgeometrien bereits während des Gussvorgangs für das Grundgestell geschaffen und sind durch eine zur Herstellung des Grundgestells eingesetzte, wiederverwendbare Gussform bestimmt. Somit stehen diese Bezugsflächen und Bezugsgeometrien zueinander in geometrischen Beziehungen, deren Toleranzen ausschließlich durch die Toleranzen der Gussform und durch die Eigenschaften des zunächst als gestaltlose Masse in die Gussform eingebrachten und anschließend in der Gussform ausgehärteten Kunststein-Materials bestimmt werden. durch die einstückige Gestaltung entfallen somit Einflüsse von Toleranzen von Einzelteilen, wie sie bei den aus dem Stand der Technik bekannten Regalspeichereinheiten berücksichtigt werden müssen und die dort entweder zu aufwändigen Fertigungsprozessen für die Einzelteile führen, um von vornherein geringe Toleranzen realisieren zu können, und/oder zu aufwändigen Messarbeiten führen, die bei der Einrichtung der Regalspeichereinheit im Zusammenhang mit einer Anbindung an die Automationsanlage vorgenommen werden müssen. Aufgrund der Verwendung des Kunststein-Materials, dessen Aushärtevorgang auf chemischen Bindungsprozessen beruht und allenfalls geringe thermische Anteile aufweist, muss allenfalls ein geringer Wärmeverzug des Grundgestells in Betracht gezogen werden, der erheblich geringer ist als ein Wärmeverzug bei einer Verwendung von Metallgussverfahren. Ferner kann das Kunststein-Material auch im Hinblick auf einem thermischen Expansionskoeffizienten, der bei wechselnden Umgebungstemperaturen während des Einsatzes der Regalspeichereinheit zu berücksichtigen ist, und/oder im Hinblick auf eine Materialschwindung während des Aushärtevorgangs durch geeignete Auswahl von chemischen Zusatzstoffen auf die Anforderungen optimiert werden. Für eine geometrisch präzise Anordnung von Ablagevorrichtungen an den Regalseitenteilen sind diese mit Einsatzteilen versehen, bei denen es sich insbesondere um Metallteile handeln kann und die stoffschlüssig in den Regalseitenteilen aufgenommen sind. Vorzugsweise ist vorgesehen, dass die Einsatzteile vor dem Gussvorgang für das zunächst gestaltlose Kunststein-Material in die Gussform eingesetzt werden, wobei die Gussform hierfür mit entsprechenden Aufnahmen für die Einsatzteile versehen ist. Hierdurch kann eine hochpräzise Ausrichtung der Einsatzteile zueinander und gegenüber den im Rahmen des Gussvorgangs gebildeten Regalseitenteilen gewährleistet werden. Ferner werden die Einsatzteile im Zuge des Aushärtevorgangs, bei dem das zunächst gestaltlose Kunststein-Material zu einem gestaltfesten Kunststein-Körper aushärtet, in vorteilhafter Weise unmittelbar stoffschlüssig mit dem Kunststein-Material verbunden. Ferner kann vorgesehen sein, dass die Einsatzteile eine zumindest bereichsweise profilierte, insbesondere hinterschnittene, Außengeometrie aufweisen, aufgrund derer auch eine formschlüssige Festlegung der Einsatzteile im Kunststein-Material gewährleistet ist. In Abhängigkeit von der chemischen Zusammensetzung des zunächst gestaltlosen Kunststein-Materials findet während des Aushärtevorgangs gegebenenfalls eine geringfügige Schwindung des Kunststein-Materials statt, durch die gewissermaßen ein Aufschrumpfen des Kunststein-Materials auf die Einsatzteile stattfindet, wodurch ebenfalls eine zuverlässige Verankerung der Einsatzteile in den Regalseitenteilen unterstützt wird.

Vorteilhafte Weiterbildungen der Erfindung sind Gegenstand der Unteransprüche.

Zweckmäßig ist es, wenn der Kunststein ein zementhaltiger oder harzgebundener Beton ist und/oder eine lackierfähige Oberfläche aufweist. Der Kunststein wird aus einem Gemisch eines Bindemittels und einer Gesteinskörnung gebildet, wobei die auch als Zuschlag bezeichnete Gesteinskörnung beispielhaft aus Kies und Sand zusammengesetzt sein kann. Als Bindemittel kommen wahlweise Zement oder Kunstharz zum Einsatz, wobei in Abhängigkeit von der Zusammensetzung der Gesteinskörnung und der Auswahl des Bindemittels sowie gegebenenfalls vorgesehener chemischer Zusatzstoffe eine große Gestaltungsfreiheit für die Einstellung der Eigenschaften des Kunststeins ermöglicht wird. Besonders vorteilhaft ist es, wenn der Kunststein eine lackierfähige Oberfläche aufweist, da hierdurch eine kostengünstige und technisch sowie optisch hochwertige Endbearbeitung des Grundgestells gewährleistet werden kann. Mit dieser Endbearbeitung kann beispielsweise eine dauerhafte Versiegelung des Grundgestells gegenüber Umwelteinflüssen wie Feuchtigkeit und/oder Öl und/oder Ölnebel und/oder Kühlschmiermittel sowie gegebenenfalls eine optisch ansprechende Oberflächengestaltung für das Grundgestell erreicht werden.

Bei einer Ausgestaltung der Erfindung ist vorgesehen, dass die, insbesondere zu Einsatzteilgruppen zusammengefassten, Einsatzteile als Buchsen, insbesondere als Gewindebuchsen, zur Aufnahme von Stützstäben ausgebildet sind. Die Buchsen ermöglichen somit unter Zuhilfenahme von Stützstäben eine Anbringung von Ablagevorrichtungen an den Regalseitenteilen in einer Vielzahl von unterschiedlichen Positionen, so dass in Abhängigkeit von den Geometrien der in der Regalspeichereinheit aufzunehmenden Gegenstände eine geeignete Anordnung der Ablagevorrichtungen ermöglicht wird. Vorzugsweise handelt es sich bei den Buchsen um im Wesentlichen hülsenförmige, vorzugsweise metallische, insbesondere aus Stahl hergestellte, Bauteile. Die Einsatzteile können an einer Außenoberfläche, die mit dem Kunststein in stoffschlüssigem Kontakt steht, mit einer Beschichtung versehen sein, um eine vorteilhafte stoffschlüssige Anbindung an den Kunststein zu gewährleisten. Ergänzend oder alternativ können die Einsatzteile an einer Außenoberfläche mit einer Profilierung versehen sein, um eine zuverlässige formschlüssige Verriegelung im Kunststein zu gewährleisten. Dies ist insbesondere dann von Bedeutung, wenn die Einsatzteile als Gewindebuchsen ausgebildet sind und dementsprechend zur Ableitung von Drehmomenten, die bei Schraubvorgängen auftreten, in den Kunststein geeignet sein müssen. Beispielhaft kann vorgesehen sein, dass die Gewindebuchsen mit einem Innengewinde versehen sind, das eine Schraubbefestigung von weiteren Bauteilen, insbesondere Stützstäben, an den Regalseitenteilen mittels einer Gewindebefestigung, insbesondere einer geeigneten Schraube, ermöglicht. Vorteilhaft ist es, wenn die Einsatzteile oberflächenbündig in den Regalseitenteilen aufgenommen sind, so dass sie keine Störkontur für die Handhabung von Gegenständen bilden, die in die Regalspeichereinheit eingelagert oder aus dieser entnommen werden.

Bevorzugt ist vorgesehen, dass Einsatzteile mit Stützstäben versehen sind, die jeweils in Richtung des gegenüberliegenden Regalseitenteils abragen, und dass eine zwischen den Regalseitenteilen aufgenommene Ablagevorrichtung auf wenigstens drei Stützstäben aufliegt. Vorzugsweise werden nur diejenigen Einsatzteile in den Regalseitenteilen mit Stützstäben versehen, die anschließend auch zur Aufnahme von Ablagevorrichtungen genutzt werden, während gegebenenfalls überzählige Einsatzteile in den Regalseitenteilen ohne Stützstäbe verbleiben. Die Stützstäbe können beispielhaft als kreiszylindrische Hülsen ausgebildet sein, die mit Maschinenschrauben an den als Gewindebuchsen ausgebildeten Einsatzteilen festgelegt werden. Die wenigstens eine zur Aufnahme der Werkstücke und/oder Werkstückpaletten und/oder Werkzeuge dienende, vorzugsweise in horizontaler Ausrichtung zwischen den Regalseitenteilen aufgenommene Ablagevorrichtung liegt, insbesondere insgesamt, auf wenigstens drei Stützstäben auf, wodurch eine zuverlässige Einleitung von Gewichtskräften der Ablagevorrichtungen und der darauf aufgenommenen Werkstücke und/oder Werkstückpaletten und/oder Werkzeuge gewährleistet werden kann. Vorzugsweise liegt die Ablagevorrichtung beidseitig auf jeweils paarweise angeordneten Stützstäben auf. Besonders bevorzugt ist vorgesehen, dass die Ablagevorrichtung beidseitig auf jeweils drei Stützstäben aufliegt.

Vorteilhaft ist es, wenn die Ablagevorrichtung zwischen den einander gegenüberliegenden Regalseitenteilen schiebebeweglich, insbesondere mit genau einem translatorischen Bewegungsfreiheitsgrad, auf den Stützstäben aufliegt und/oder dass die Ablagevorrichtung wenigstens einen Stützstab formschlüssig umgibt, wobei dieser Stützstab als Führungsstab für eine lineare Führung der Ablagevorrichtung ausgebildet ist. Eine schiebebewegliche und damit schwimmende Lagerung der Ablagevorrichtungen gegenüber den Regalseitenteilen gewährleistet eine Entkopplung von Kräften, die andernfalls von der Ablageeinrichtung in Längsrichtung der Stützstäbe in die Regalseitenteile eingeleitet würden und zu unerwünschten Biegemomenten auf die Regalseitenteile führen würden. Derartige Kräfte treten auf, wenn durch Belastung der Ablageeinrichtung mit den Werkstücken und/oder Werkstückpaletten und/oder Werkzeugen eine Durchbiegung der jeweiligen Ablageeinrichtung auftritt, die bei einer vollständigen Kopplung der Ablageeinrichtung mit den Regalseitenteilen zu Zugkräften auf die Regalseitenteile führen würde. Bevorzugt ist vorgesehen, dass die Ablageeinrichtung gegenüber den Regalseitenteilen genau einen einzigen Freiheitsgrad der Bewegung, bei dem es sich um einen translatorischen Freiheitsgrad handelt, aufweist. Dies kann exemplarisch dadurch verwirklicht werden, dass die Auflageeinrichtung wenigstens einen der Stützstäbe derart umgibt, dass in Raumrichtungen abseits des gewünschten translatorischen Freiheitsgrads eine formschlüssige Kopplung zwischen Auflageeinrichtung und Stützstab vorliegt. Beispielhaft ist die Auflageeinrichtung hierzu mit einer Ausnehmung versehen, die auf eine Außengeometrie des jeweiligen Stützstabs angepasst ist, so dass dieser als Führungsstab für die lineare Führung der Auflageeinrichtung dienen kann.

Bei einer vorteilhaften Weiterbildung der Erfindung ist vorgesehen, dass die Ablagevorrichtung als prismatisches Profilteil, vorzugsweise als Kunststoffextrusionsprofil, besonders bevorzugt als Aluminiumstrangpressprofil, insbesondere als Stahlblechprofilteil, mit einem längs des Abstands der Regalseitenteile konstanten Querschnitt ausgebildet ist und jeweils endseitig mit einer dem Regalseitenteil gegenüberliegend angeordneten Trägerplatte versehen ist, die Ausnehmungen für eine Kopplung mit den Stützstäben umfasst. Vorzugsweise weist die Ablagevorrichtung einen zur Ausrichtung in einer horizontalen Ebene vorgesehenen, plattenförmigen Grundkörper auf, dessen Oberseite zur Auflage der Werkstücke und/oder Werkstückpaletten und/oder Werkzeugen ausgebildet ist und hierzu beispielhaft eben ausgeführt ist. An einer Unterseite des Grundkörpers können beispielsweise rechtwinkelig zur Oberseite erstreckte Stützen oder Streben ausgebildet sein, mit deren Hilfe eine Versteifung des Grundkörpers erzielt wird. Für die Kopplung mit den Stützstäben, die in den Regalseitenteilen festgelegt sind, umfasst die Ablagevorrichtung jeweils endseitig angeordnete Trägerplatten, die mit Bohrungen und/oder seitlich offenen Ausnehmungen versehen sein kann, in die die Stützstäbe eingreifen, um die gewünschte, insbesondere schwimmende, Anordnung der Ablagevorrichtung an den Regalseitenteilen zu gewährleisten.

Bevorzugt ist vorgesehen, dass auf einer Oberseite der Ablagevorrichtung eine Aufnahmeplatte angeordnet ist, die eine Vielzahl von Ausnehmungen zur Festlegung von Werkstückpaletten umfasst und die wenigstens eine Zentrierausnehmung für einen Eingriff eines Zentrierelements aufweist, wobei das Zentrierelement am Grundgestell festgelegt ist und eine Position der Aufnahmeplatte gegenüber dem Grundgestell bestimmt. Die Aufnahmeplatte hat die Aufgabe, die Position einer oder mehrerer Werkstückpaletten zu bestimmen, die in den Ausnehmungen der Aufnahmeplatte aufgenommen werden können. Um eine möglichst präzise Beziehungen zwischen den vorzugsweise hochgenau in die Aufnahmeplatte eingebrachten Ausnehmungen und den daran festzulegenden Werkstückpaletten gegenüber dem Grundgestell zu gewährleisten, umfasst die Aufnahmeplatte wenigstens eine Zentrierausnehmung, die gegenüber den Ausnehmungen ebenfalls hochgenau mit engen Toleranzen hergestellt ist. Die Zentrierausnehmung umfasst wenigstens eine Bezugsoberfläche, die für einen Flächenkontakt mit einer korrespondierenden Bezugsoberfläche eines Zentrierelements ausgebildet ist, das seinerseits am Grundgestell festgelegt ist. Hierdurch wird eine präzise Zuordnung zwischen den hochgenau am Grundgestell ausgebildeten Aufnahmen für die Zentrierelemente, der Aufnahmeplatte und den an der Aufnahmeplatte festlegbaren Werkstückpaletten gewährleistet.

In weiterer Ausgestaltung der Erfindung ist vorgesehen, dass der Regalständer jeweils unterhalb der Regalseitenteile angeordnete Standblöcke umfasst und dass zwischen einer von den Regalseitenteilen begrenzten Regalausnehmung und einer von den Standblöcken begrenzten Standblockausnehmung eine Verbindungsplatte ausgebildet ist. Die Standblöcke dienen zur Auflage der Regalspeichereinheit auf einem Untergrund, insbesondere einem Maschinengestell oder Maschinenfundament, und leiten die Gewichtskräfte der Regalspeichereinheit und der darin aufgenommenen Werkstücke und/oder Werkstückpaletten und/oder Werkzeuge auf den Untergrund ab. Um einen stabilen Verbund aus den Regalseitenteilen und den Standblöcken herzustellen ist die Verbindungsplatte vorgesehen, die sich mit einer größten Oberfläche vorzugsweise in einer horizontalen Ebene erstreckt und die einstückig zusammen mit den Regalseitenteilen und den Standblöcken als Kunststein-Gussteil hergestellt ist. Exemplarisch kann vorgesehen sein, dass an einer den Regalseitenteilen abgewandten Unterseite der Standblöcke jeweils höhenverstellbare Standfüße angebracht sind, mit denen eine Höhenanpassung und/oder Neigungsanpassung für die Regalspeichereinheit gegenüber weiteren Maschinenkomponenten ermöglicht wird.

Zweckmäßig ist es, dass die Standblöcke an einander zugewandten Oberflächen jeweils, insbesondere spiegelbildlich angeordnete, nutartige Vertiefungen aufweisen, die zum Eingriff von Gabelstaplerzinken ausgebildet sind, um einen Gabelstaplertransport der kompletten Regalspeichereinheit zu ermöglichen.

Bevorzugt ist vorgesehen, dass vordere Schmalflächen der Regalseitenteile in einer gemeinsamen Schnittstellenebene mit Stirnflächen der Standblöcke angeordnet sind und dass die vorderen Schmalflächen und/oder die Stirnflächen mit Kopplungsmitteln und/oder mit Zentriermitteln, insbesondere mit Vorsprüngen und/oder Vertiefungen, versehen sind, die für eine mechanische Verbindung mit einer Maschinenkomponente ausgebildet sind. Hierdurch kann eine vorteilhafte Kopplung der Regalspeichereinheit mit einer Maschinenkomponente, insbesondere einem Maschinenbett eines Manipulators, erreicht werden. Beispielhaft ist vorgesehen, dass die Schnittstellenebene der Regalspeichereinheit und die Maschinenkomponente zueinander korrespondierende Kopplungsmittel und/oder Zentriermittel aufweisen, mit denen eine präzise Ausrichtung der Regalspeichereinheit gegenüber der Maschinenkomponente gewährleistet werden kann, um eine Automationsanlage zu bilden. Vorteilhaft ist es, wenn die Standblöcke und/oder die Regalseitenteile rückseitig mit einer, insbesondere leistenartig ausgebildeten, Stützplatte verbunden sind. Hierdurch wird eine Stabilisierung der Regalspeichereinheit erzielt. Bevorzugt erstreckt sich eine größte Oberfläche der Stützplatte parallel zu einer Schnittstellenebene der Standblöcke und parallel zum vorderen Schmalflächen der Regalseitenteile, insbesondere in vertikaler Raumrichtung. Beispielhaft ist die Stützplatte leistenartig, insbesondere mit einem rechteckigen Querschnitt, ausgebildet, wobei sich eine längste Kante der Stützplatte vorzugsweise in horizontaler Richtung erstreckt. Vorzugsweise weist die Stützplatte eine quaderförmige Hüllgeometrie auf.

Bei einer vorteilhaften Weiterbildung der Erfindung ist vorgesehen, dass die Regalseitenteile angrenzend an die Standblöcke mit einer ersten Stützplatte und an einem von den Standblöcken abgewandten Endbereich mit einer zweiten Stützplatte verbunden sind und dass zwischen den beiden Stützplatten eine, vorzugsweise rechteckige, insbesondere mit einer transparenten Sichtscheibe verschlossene, Ausnehmung ausgebildet ist. Mit Hilfe der ersten und der zweiten Stützplatten, die beabstandet voneinander angeordnet sind und deren längste Kanten vorzugsweise jeweils in horizontaler Richtung ausgerichtet sind, wird eine erhebliche Stabilisierung der Regalspeichereinheit verwirklicht. Ferner ermöglicht eine zwischen den beiden Stützplatten ausgebildete Ausnehmung, die vorzugsweise aus Sicherheitsgründen mit einer transparenten Sichtscheibe verschlossen ist, eine Betrachtung der in der Regalspeichereinheit aufgenommenen Werkstücke und/oder Werkstückpaletten und/oder Werkzeuge. Hierdurch kann sich ein Bediener einen Überblick verschaffen, wie die Regalspeichereinheit zu einem gegebenen Zeitpunkt bestückt ist.

In weiterer Ausgestaltung der Erfindung ist vorgesehen, dass die Regalseitenteile an einem den Standblöcken zugewandten Endbereich eine keilförmige Verbreiterung aufweisen, die sich von einer vorderen Schmalfläche des jeweiligen Regalseitenteils bis zu einer Innenrückfläche des Regalseitenteils erstreckt. Diese Verbreiterung ermöglicht einen vorteilhaften Kraftfluss zwischen den Regalseitenteilen und den Standblöcken, insbesondere im Hinblick auf Biegemomente, die auf die Regalseitenteile eingeleitet werden und in die Standblöcke abgeleitet werden sollen. Hierzu ist vorgesehen, dass die Regalseitenteile, vorzugsweise in vertikaler Richtung nach unten, abschnittsweise keilförmig verbreitert ausgeführt sind, wodurch eine Verteilung von Kräften in einem Verbindungsbereich mit den Standblöcken erzielt wird, so dass innere Spannungen im Kunststein-Material stets unterhalb eines vorgegebenen Maximal-Spannungsniveaus verbleiben. Vorzugsweise erstreckt sich die keilförmige Verbreiterung zumindest nahezu über die gesamte Tiefe der Regalseitenteile, um unerwünschte Spannungsspitzen im Kunststein-Material zu vermeiden.

Vorteilhaft ist es, wenn die Regalseitenteile als prismatische Profilkörper mit L-förmigem Querschnitt ausgebildet sind, wobei eine größte Außenseitenfläche des Regalseitenteils und eine daran angrenzende Außenrückfläche des Regalseitenteils rechtwinklig zueinander ausgerichtet sind und/oder wobei eine größte Innenseitenfläche des Regalseitenteils und eine daran angrenzende Innenrückfläche des Regalseitenteils rechtwinklig oder stumpfwinklig zueinander ausgerichtet sind. Vorzugsweise sind die größte Außenseitenfläche und die daran angrenzende Außenrückfläche des Regalseitenteils jeweils eben ausgebildet. Die größte Innenseitenfläche des Regalseitenteils, an der auch die Einsatzteile angeordnet sind und die Stützstäben angebracht werden können, ist vorzugsweise eben ausgebildet. Exemplarisch kann vorgesehen sein, dass die größte Innenseitenfläche einen spitzen Winkel mit der größten Außenseitenfläche des Regalseitenteils einnimmt, so dass sich das Regalseitenteil ausgehend von der Innenrückfläche in Richtung der vorderen Schmalfläche geringfügig verjüngt, womit beispielsweise eine Entformung aus der Gussform unterstützt werden kann. Ferner kann exemplarisch vorgesehen sein, dass die Innenrückfläche des Regalseitenteils parallel zur Außenrückfläche des Regalseitenteils ausgerichtet ist.

In weiterer Ausgestaltung der Erfindung ist vorgesehen, dass die Innenrückfläche des Regalseitenteils mit einer in Richtung eines Endbereichs eines kürzeren L-Schenkels verlaufenden Verjüngung, insbesondere einer Schrägfläche, versehen ist. Durch diese Verjüngung wird ein vorteilhafter Kraftfluss an einem Übergang zwischen dem Regalseitenteil und den eventuell vorgesehenen Stützplatten erzielt. Dies ist insbesondere dann von Bedeutung, wenn der kürzere L-Schenkel zwischen der Innenrückfläche und der Außenrückfläche eine Materialstärke aufweist, die das 1,5- bis 3-fache einer Materialstärke zwischen der größten Außenseitenfläche und der größten Innenseitenfläche des Regalseitenteils beträgt. Durch die Verjüngung können lokale Kraftspitzen im Kunststein-Material vermieden werden, die ansonsten zu lokalen Schäden an der Regalspeichereinheit führen könnten.

Die Aufgabe der Erfindung wird für eine Automationsanlage der eingangs genannten Art mit den Merkmalen des Anspruchs 15 gelöst. Erfindungsgemäß ist vorgesehen, dass die Automationsanlage zum automatischen Wechseln von Werkstücken und/oder Werkstückpaletten und/oder Werkzeugen an mindestens einer Bearbeitungsmaschine, insbesondere an einer Werkzeugmaschine, ausgebildet ist und einen Manipulator, insbesondere einen Industrieroboter, und zumindest eine Regalspeichereinheit nach einem der Ansprüche 1 bis 14 umfasst. Mit Hilfe des Manipulators, der insbesondere als Mehrachs-Industrieroboter ausgebildet sein kann, können die Werkstücke und/oder Werkstückpaletten und/oder Werkzeuge von der Regalspeichereinheit an eine Bearbeitungsmaschine zugeführt oder in umgekehrter Weise in der Regalspeichereinheit eingelagert werden. Vorteilhaft ist es, wenn der Manipulator auf einem Maschinenbett, insbesondere aus Kunststein, aufgenommen ist, das eine an die Regalspeichereinheit angepasste mechanische Schnittstelle umfasst. Damit wird eine zuverlässige und präzise Positionierung der Regalspeichereinheit gegenüber dem Manipulator unter Zuhilfenahme der an den gegenüberliegenden Schnittstellen der Regalspeichereinheit und des Maschinenbetts vorgesehenen Kopplungsmitteln und/oder Zentriermitteln gewährleistet.

Eine vorteilhafte Ausführungsform der Erfindung ist in der Zeichnung dargestellt. Hierbei zeigt:
- Figur 1: eine perspektivische Darstellung einer Bearbeitungsmaschine mit angekoppelter Automationsanlage,
- Figur 2: eine perspektivische Darstellung einer Regalspeichereinheit zur Verwendung in der Automationsanlage gemäß der Figur 1,
- Figur 3: die Regalspeichereinheit nach Figur 2 in einer Vorderansicht, jedoch ohne Werkstücke und Werkstückpaletten,
- Figur 4: die Regalspeichereinheit nach Figur 3 in einer Vertikalschnittdarstellung,
- Figur 5: die Regalspeichereinheit nach Figur 3 in einer Draufsicht mit einer Detailvergrößerung für einen Bereich einer Aufnahmeplatte,
- Figur 6: eine vergrößerte Darstellung der Lagerung zweier Ablagevorrichtungen an einem Regalseitenteil in einer perspektivischen Darstellung, und
- Figur 7: eine Ausschnittvergrößerung des Regalseitenteils mit einer daran aufgenommenen Ablagevorrichtung gemäß der Figur 4.

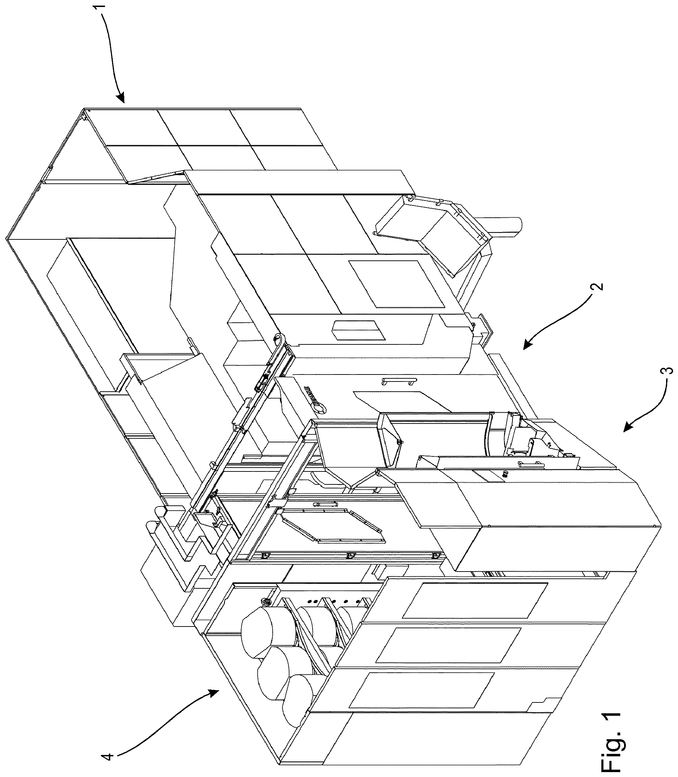

Eine in der Figur 1 dargestellte Bearbeitungsmaschine 1 ist beispielhaft als Bearbeitungszentrum zur Durchführung von Fräsvorgängen ausgebildet und ist mit einer Schleuseneinrichtung 2 versehen, durch die nicht näher dargestellte Werkstücke und Werkzeuge in einen nicht näher dargestellten Bearbeitungsraum der Bearbeitungsmaschine 1 zugeführt und aus diesem abgeführt werden können. Die Schleuseneinrichtung 2 ist mit einer Automationsanlage 3 gekoppelt, deren Aufgabe darin besteht, die Werkstücke und Werkzeuge an die Bearbeitungsmaschine 1 zur Verfügung zu stellen und aus der Bearbeitungsmaschine 1 zu entnehmen. Die Automationsanlage 3 umfasst einen nicht näher dargestellten Manipulator, insbesondere einen Industrieroboter, der für die Bewegung der Werkstücke und Werkzeuge eingesetzt wird, sowie eine Regalspeichereinheit 4, die nachstehend im Detail beschrieben wird. Durch die Kombination der Bearbeitungsmaschine 1 mit der Schleuseneinrichtung 2 sowie der Automationsanlage 3 kann insbesondere ein länger andauernder autonomer Betrieb der Bearbeitungsmaschine 1 gewährleistet werden. Dabei können mehrere Werkstücke nacheinander aus der Regalspeichereinheit 4 entnommen und in den Bearbeitungsraum der Bearbeitungsmaschine 1 zugeführt werden, fertig bearbeitete Werkstücke können aus dem Bearbeitungsraum entnommen und wieder in die Regalspeichereinheit 4 zurückgeführt werden. Um eine gezielte Bearbeitung der Werkstücke gewährleisten zu können, ist es vorteilhaft, wenn die Werkstücke in der Regalspeichereinheit 4 an präzise vorgebbaren Positionen aufgenommen werden, so dass bei einer Zuführung in den Bearbeitungsraum der Bearbeitungsmaschine 1 idealerweise keine zusätzlichen Vorkehrungen zur Ausrichtung der Werkstücke vorgenommen werden müssen und vielmehr eine sofortige Bearbeitung des jeweiligen Werkstücks erfolgen kann.

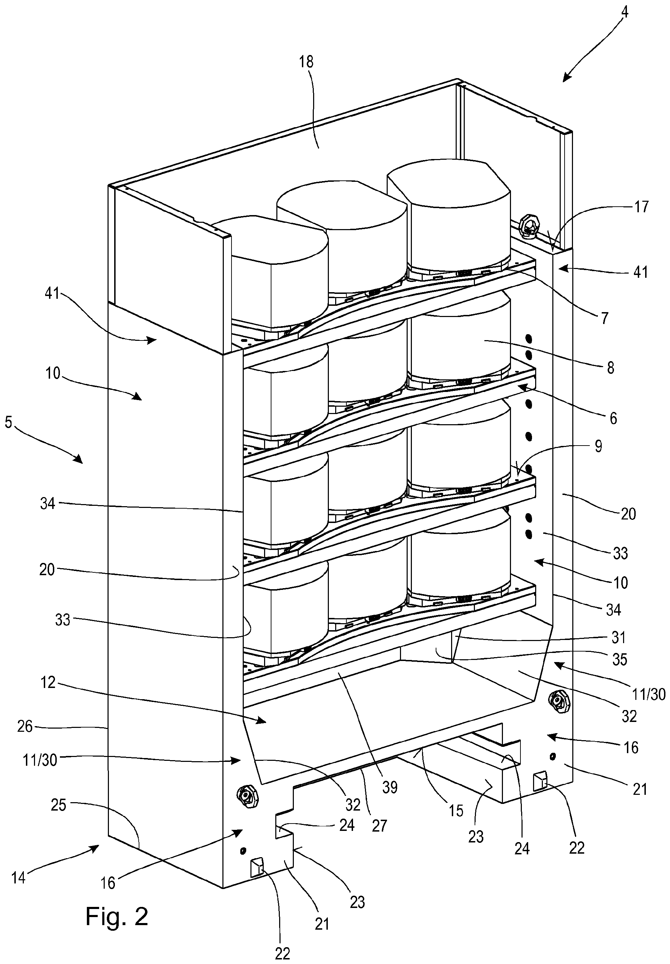

Die in den Figuren 2 bis 7 näher dargestellte Regalspeichereinheit 4 umfasst gemäß der Darstellung der Figur 2 ein Grundgestell 5, an dem mehrere Ablagevorrichtungen 6 mit darauf festgelegten Aufnahmeplatten 70 aufgenommen sind, die rein exemplarisch jeweils drei Werkstückpaletten 7 mit daran aufgenommenen Werkstücken 8 tragen. Dabei weisen die Ablagevorrichtungen 6 jeweils eine eben ausgebildete größte Oberfläche 9 auf, die als Auflagefläche für die jeweiligen Aufnahmeplatten 70 dienen, die ihrerseits zur Ablage der Werkstückpaletten 7 genutzt werden können und deren größte Oberfläche 74 vorzugsweise horizontal ausgerichtet ist.

Die nachstehend verwendeten Richtungsbezeichnungen Horizontal und Vertikal sind einem typischen Einsatzfall für die Regalspeichereinheit 4 zugeordnet, bei dem die Regalspeichereinheit 4 in einer Weise eingesetzt wird, wie dies in der Figur 1 exemplarisch gezeigt ist.

Das aus Kunststein hergestellte Grundgestell 5 weist eine im wesentlichen U-förmige Gestalt auf, wobei freie U-Schenkel des Grundgestells 5 durch Regalseitenteile 10 gebildet werden, die jeweils an unteren Endbereichen 11 von einer Verbindungsplatte 12 miteinander verbunden sind. An einer Unterseite 15 der Verbindungsplatte 12 sind Standblöcke 16 ausgebildet, die sich jeweils in Verlängerung der Regalseitenteile 10 erstrecken. Dabei bilden die Verbindungsplatte 12 und die Standblöcke 16 einen Regalständer 14, an dem die Regalseitenteile 10 angebracht sind.

An Oberseiten 17 der Regalseitenteile 10, die exemplarisch horizontal ausgerichtet und eben ausgebildet sind, ist eine nach oben und nach vorne offene Schutzabdeckung 18 vorgesehen, die zur Abschirmung der obersten Reihe der Werkstücke 8 dient. Die Schutzabdeckung 18 kann beispielhaft als Blechbiegeteil ausgebildet sein und mit den Oberseiten 17 der Regalseitenteile 10 verschraubt sein.

Vordere Schmalflächen 20 der Regalseitenteile 10 sind rein exemplarisch in einer gemeinsamen, nicht näher bezeichneten, Schnittstellenebene mit Stirnflächen 21 der Standblöcke 16 angeordnet und können für eine Ankopplung der Regalspeichereinheit 4 an eine korrespondierend ausgebildete, nicht dargestellte Schnittstellenebene des Manipulators der Automationsanlage 3 genutzt werden. Beispielhaft ist vorgesehen, dass an jeder der Stirnflächen 21 der Standblöcke 16 jeweils ein pyramidenstumpfförmiger Vorsprung 22 ausgebildet ist, der in eine nicht dargestellte korrespondierende Ausnehmung am Manipulator der Automationsanlage 3 eingreifen kann, um eine präzise Positionierung der Regalspeichereinheit 4 gegenüber der Automationsanlage 3 zu gewährleisten.

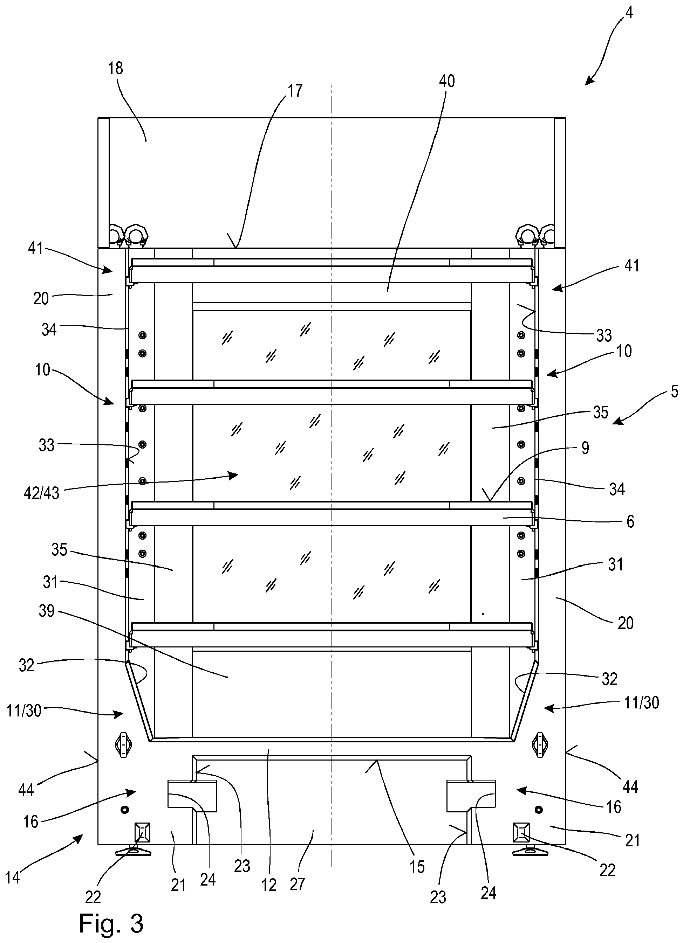

Wie aus den Darstellungen der Figuren 2 und 3 entnommen werden kann, weisen die rein exemplarisch quaderförmig ausgebildeten Standblöcke 16 an einander gegenüberliegenden Oberflächen 23 eingebrachte nutartige Vertiefungen 24 auf, die sich beispielhaft entlang der längsten Kante 25 der Standblöcke 16 erstreckt. Die Ausrichtung dieser längsten Kante 25 wird nachfolgend auch als Tiefe der Regalspeichereinheit 4 bezeichnet.

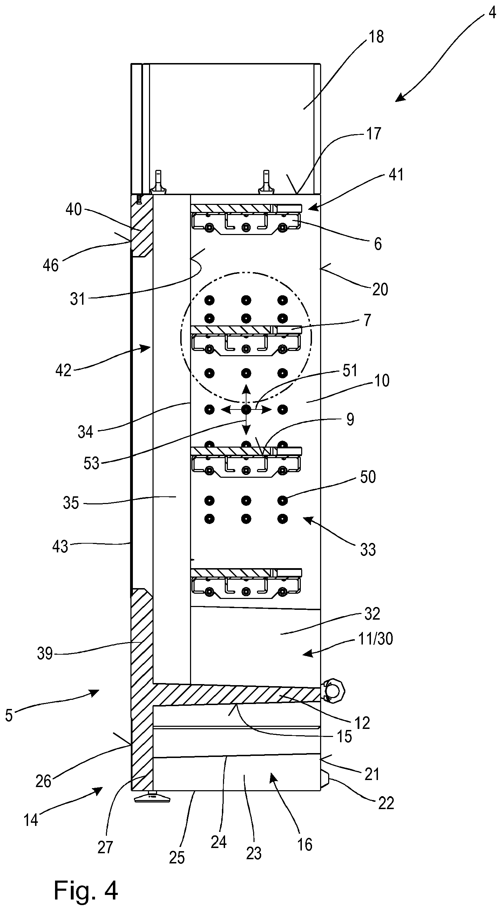

An einer der Stirnfläche 21 abgewandten Rückseite 26 der Standblöcke 16, die insbesondere in der Figur 4 gut zu erkennen ist, erstreckt sich zwischen den Standblöcken 16 eine untere Stützplatte 27, die gemäß der Schnittdarstellung der Figur 4 einen konstanten, beispielhaft rechteckigen, Querschnitt und damit auch eine konstante Wandstärke aufweist und die von den nutförmigen Vertiefungen 24 durchsetzt ist, wie dies aus der Figur 3 hervorgeht. Somit ermöglichen die nutartigen Vertiefungen 24 den Eingriff von nicht dargestellten Gabelstaplerzinken in die Regalspeichereinheit 4, um die Regalspeichereinheit 4 in günstiger Weise transportieren zu können. Besonders bevorzugt ist vorgesehen, dass die nutartigen Vertiefungen ausgehend von der Rückseite 26 bis hin zur Stirnfläche 21 der Standblöcke 16 eine geringfügige Verjüngung aufweisen, um eine vorteilhafte Anpassung an eine typische Profilierung der Gabelstaplerzinken und damit eine möglichst geringe Kippneigung für die Regalspeichereinheit 4 bei einem Gabelstaplertransport zu gewährleisten.

Aus den Darstellungen der Figuren 2 und 3 ist ferner zu entnehmen, dass die Regalseitenteile 10 an dem Endbereich 11, der den Standblöcken 16 zugewandt ist, in ihrem vertikalen Verlauf eine keilförmige Verbreiterung 30 aufweisen. Diese Verbreiterung 30 erstreckt sich zudem in horizontaler Richtung von der vorderen Schmalfläche 20 des jeweiligen Regalseitenteils 10 bis zu einer in den Figuren 3, 4, 5 und 6 erkennbaren Innenrückfläche 31 des Regalseitenteils 10. Die Verbreiterung 30 dient einem vorteilhaften Kraftfluss zwischen den Regalseitenteilen 10 und den Standblöcken 16. Exemplarisch ist vorgesehen, dass sich aufgrund der Verbreiterung 30 eine Schrägfläche 32 an eine größte Innenseitenfläche 33 des Regalseitenteils 10 anschließt und mit der Innenseitenfläche 33 einem stumpfen Winkel, exemplarisch von ca. 165 Grad, einnimmt. Wie aus den Figuren 2, 3 und 4 entnommen werden kann, grenzt die Schrägfläche 32 in gleicher Weise wie die größte Innenseitenfläche 33 in rechten Winkel an die Innenrückfläche 31, deren längste Kante 34 parallel zur größten Innenseitenfläche 33 erstreckt ist. Aus der Figur 3 ist zu entnehmen, dass die Innenrückfläche 31 rein exemplarisch streifenförmig und eben ausgebildet ist und aufgrund der Verbreiterung 30 der Regalseitenteile 10 im unteren Endbereich 11 keilförmig zuläuft.

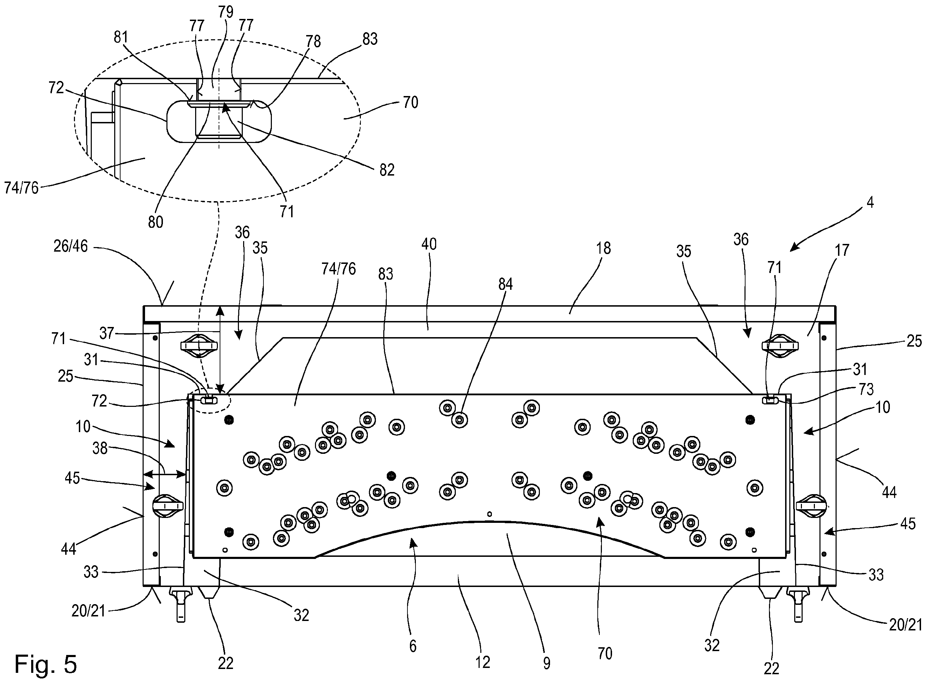

Aus den Darstellungen der Figuren 2, 3, 4 und 5 ist ferner zu entnehmen, dass angrenzend an die Innenrückfläche 31 eine zweite Schrägfläche 35 angeordnet ist, deren längste Kante identisch mit der längsten Kante 34 der Innenrückfläche 31 ist und die eine keilförmige endseitige Verjüngung eines kürzeren L-Schenkels 36 der in Figur 5 erkennbaren L-förmigem Profilierung des Regalseitenteils 10 begrenzt. Aufgrund der exemplarischen Ausgestaltung des kürzeren L-Schenkels 36 des Regalseitenteils 10 mit einer Wandstärke 37, die in etwa der doppelten Wandstärke 38 eines längeren L-Schenkels 45 des L-förmig profilierten Regalseitenteils 10 entspricht, leistet der kürzere L-Schenkel 36 einen erheblichen Beitrag für eine Erhöhung der Biegesteifigkeit des Regalseitenteils 10 gegenüber normal zur größten Innenseitenfläche 33 ausgerichteten Biegekräften.

Eine weitere Stabilisierung der beiden gegenüberliegend angeordneten Regalseitenteile 10 wird durch Stützplatten 39, 40 erreicht, wie sie in den Figuren 4 und 5 erkennbar sind. Dabei schließt sich die mittlere Stützplatte 39, die auch als erste Stützplatte 39 der Regalseitenteile 10 bezeichnet werden kann, unmittelbar an die untere Stützplatte 27 der Standblöcke 16 an und weist gemäß der Darstellung der Figur 4 eine zumindest im Wesentlichen rechteckige Profilierung auf. Die obere Stützplatte 40, die auch als zweite Stützplatte 40 der Regalseitenteile 10 bezeichnet werden kann, erstreckt sich in zwischen den gegenüberliegenden Regalseitenteilen 10 beispielhaft an einem oberen Endbereich 41 und schließt mit der Oberseite 17 der Regalseitenteile 10 bündig ab. Die beiden Stützplatten 39, 40 begrenzen zusammen mit den kurzen L-Schenkeln 36 der Regalseitenteile 10 eine rein exemplarisch rechteckig ausgebildete Ausnehmung 42. Diese Ausnehmung 42 dient als Sichtfenster auf die in der Regalspeichereinheit 4 aufgenommenen Werkstücke 8 und ist aus Sicherheitsgründen beispielhaft mit einer transparenten Sichtscheibe 43 verschlossen.

Der jeweils längere L-Schenkel 45 des Regalseitenteils 10 ist gemäß der Draufsicht in der Figur 5 ausgehend vom kürzeren L-Schenkel 36 rein exemplarisch in Richtung der vorderen Schmalfläche 20 verjüngt ausgebildet. Hierbei nehmen die einander gegenüberliegenden größten Innenseitenfläche 33 der Regalseitenteile 10 einen spitzen Winkel von beispielhaft ca. 4 Grad zueinander ein, während voneinander abgewandte, größte Außenseitenflächen 44 der Regalseitenteile 10 rein exemplarisch eben ausgebildet und parallel zueinander ausgerichtet sind. Ferner ist rein exemplarisch vorgesehen, dass die Außenseitenflächen 44 der Regalseitenteile 10 rechtwinklig zu Außenrückflächen 46 der Regalseitenteile 10 ausgerichtet sind.

Aus der Darstellung der Figuren 2, 4, 6 und 7 ist zu entnehmen, dass die größte Innenseitenfläche 33 des Regalseitenteils 10 mit einer Vielzahl von rein exemplarisch rasterartig angeordneten Einsatzteilen 50 versehen ist. Beispielhaft weisen die Einsatzteile 50 in einer Horizontalrichtung 51 eine erste Teilung 52 und in einer Vertikalrichtung 53 eine zweite Teilung 54 auf. Beispielhaft sind die Einsatzteile 50 als Gewindebuchsen mit einem Innengewinde 55 ausgebildet und werden exemplarisch in eine nicht dargestellte Gussform vor der Befüllung mit dem zunächst gestaltlosen Kunststein-Material eingesetzt und können sich dadurch stoffschlüssig mit dem Kunststein-Material verbinden. Beispielhaft ist vorgesehen, dass Längsachsen 56 der Einsatzteile 50 parallel zu einem nicht eingezeichneten Abstand der gegenüberliegenden größten Innenseitenfläche 33 der Regalseitenteile 10 ausgerichtet sind, so dass einander gegenüberliegende Einsatzteile 50 der gegenüberliegenden Regalseitenteile 10 koaxiale Längsachsen 56 aufweisen. Vorzugsweise ist vorgesehen, dass die Einsatzteile 50 gegenüber der größten Innenseitenfläche 33 zurückversetzt ausgebildet sind und dass eine nicht näher bezeichnete ringförmige Stirnfläche der Einsatzteile 50 jeweils in einer quer zur Längsachse 56 ausgerichteten, nicht dargestellten Kontaktebene angeordnet ist.

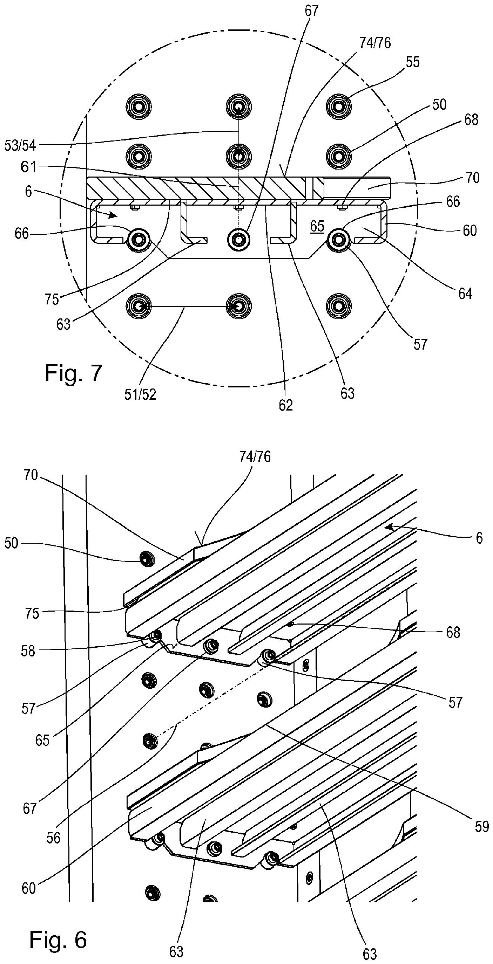

Wie aus den Figuren 6 und 7 entnommen werden kann, sind zur Festlegung der Ablagevorrichtungen 6 jeweils drei in Horizontalrichtung 51 nebeneinander angeordnete Einsatzteile 50 mit Stützstäben 57 ausgerüstet, die beispielsweise als kreiszylindrische Hülsen ausgebildet sein können, die jeweils mit Hilfe von Maschinenschrauben 58 an den jeweiligen Einsatzteilen 50 festgelegt sind. Dabei stützt sich der jeweilige Stützstab 57 mit einer nicht näher dargestellten ringförmigen Stirnfläche an der gegenüberliegenden und korrespondierend ausgebildeten, nicht bezeichneten ringförmigen Stirnfläche der Einsatzteils 50 ab.

Aus den Figuren 6 und 7 ist die Profilierung der Ablagevorrichtung 6 zu entnehmen. Rein exemplarisch umfasst die Ablagevorrichtung 6 ein jeweils endseitig entlang einer längsten Kante 59 jeweils U-förmig abgekantetes Blechteil 60, dessen größte Oberfläche die Oberfläche 9 der Ablagevorrichtung 6 bildet. Symmetrisch beabstandet zu einer Mittelachse 61 sind an einer Unterseite 62 des Blechteils 60 spiegelbildlich angeordnete, L-förmige Verstärkungsprofile 63 angebracht, die beispielhaft mit dem Blechteil 60 verschweißt sein können. Endseitig ist dem Blechteil 60 jeweils eine Trägerplatte 64 zugeordnet, deren größte Oberfläche 65 quer zur längsten Kante 59 ausgerichtet ist und die zwei offene Ausnehmungen 66 sowie eine rein exemplarisch mittig angeordnete geschlossene Ausnehmung 67 umfasst, die als Bohrung in der Trägerplatte 64 ausgebildet ist. Sowohl die offenen Ausnehmungen 66 als auch die geschlossene Ausnehmung 67 ermöglichen eine Linearbeweglichkeit der jeweiligen Trägerplatte 64 gegenüber den Stützstäben 57. Während die offenen Ausnehmungen 66 auch eine Bewegung der Trägerplatte 64 in wenigstens einer zweiten Raumrichtung zulassen würden, beschränkt die geschlossene Ausnehmung 67 die Relativbeweglichkeit der Trägerplatte 64 gegenüber den Stützstäben 57 auf genau einen, linearen Freiheitsgrad der Bewegung.

Für eine Festlegung der Ablagevorrichtung 6 zwischen den Regalseitenteilen 10 kann vorgesehen werden, zunächst an den Regalseitenteilen 10 jeweils die beiden äußeren Stützstäbe 57 festzuschrauben und anschließend die Ablagevorrichtung 6 aufzulegen. Hierbei gelangen die offenen Ausnehmungen 66 in Kontakt mit den beiden äußeren Stützstäben 57. Um eine zuverlässige Sicherung der Ablagevorrichtung 6 zu gewährleisten, wird anschließend ein weiterer Stützstab 57 durch die geschlossene Ausnehmung 67 geschoben und anschließend mit dem Einsatzteil 50 verschraubt.

An der der Ablagevorrichtung 6 sind rein exemplarisch, wie dies aus der Figur 6 zu entnehmen ist, mehrere Gewindebuchsen 68 angebracht, die für eine Festlegung einer Aufnahmeplatte 70 vorgesehen sind, die ihrerseits eine Festlegung von Werkstückpaletten 7 ermöglicht.

Wie aus der Detailvergrößerung der Figur 5 entnommen werden kann, weist die vorzugsweise als Planparallelplatte mit einer eben ausgebildeten Unterseite 75 und einer eben ausgebildeten Oberseite 76 verwirklichte Aufnahmeplatte 70 jeweils beispielhaft als Durchbrüche ausgebildete Zentrierausnehmungen 72, 73 auf. Die Zentrierausnehmungen 72, 73 weisen jeweils exemplarisch einen T-förmigem Querschnitt auf, wobei einander gegenüberliegende Seitenflächen 77 sowie eine daran angrenzende Innenfläche 78 als Bezugsflächen für einen formschlüssigen Eingriff eines Zentrierstifts 71 ausgebildet sind. Der Zentrierstift 71 ist exemplarisch mit einer Maschinenschraube 82 in ein Einsatzteil 50 eingeschraubt, das an der Innenoberfläche 31 des Grundgestells 5 vorgesehen ist und dient einer mechanischen Referenzierung zwischen Grundgestell 5 und Aufnahmeplatte 70. Hierzu umfasst der Zentrierstift 71 einen kreiszylindrisch ausgebildeten Schaftabschnitt 79 und einen den Schaftabschnitt 79 axial begrenzenden, zirkular umlaufenden Ringbund 80, der eine Ringfläche 81 aufweist. Der Ringbund 80 ist zur Aufnahme zwischen den beiden Seitenflächen 77 der Aufnahmeplatte 70 vorgesehen und gewährleistet hierüber eine Ausrichtung der Aufnahmeplatte 70 gegenüber dem Grundgestell 5 in Richtung einer längsten Kante 83 der Aufnahmeplatte 70. Die Ringfläche 81 ist zur Anlage an der Innenfläche 78 der jeweiligen Zentrierausnehmung 72, 73 vorgesehen und stellt somit die Ausrichtung der Aufnahmeplatte 70 in horizontaler Richtung quer zur längsten Kante 83 sicher.

Vorzugsweise ist vorgesehen, dass beispielhaft die Toleranz für einen Abstand der Seitenflächen 77 der Zentrierausnehmung 72 bezogen auf einen Außendurchmesser des Schaftabschnitts 79 sehr eng gewählt sind, so dass durch das Zusammenwirken des Schaftabschnitts 79 und der Seitenflächen 77 der Zentrierausnehmung 72 ein Festlager gebildet wird, durch das die Position der Aufnahmeplatte 70 gegenüber dem Grundgestell 5 in Richtung der längsten Kante 83 festgelegt wird. In gleicher Weise kann vorgesehen sein, dass eine Länge des Schaftabschnitt 79 und ein Abstand der Innenfläche 78 gegenüber der längsten Kante 83 für die Zentrierausnehmung 72 eng toleriert ist, so dass hierüber auch in horizontaler Richtung quer zur längsten Kante 83 ein Festlager geschaffen wird, durch das die Position der Aufnahmeplatte 70 gegenüber dem Grundgestell 5 in horizontaler Richtung quer zur längsten Kante 83 festgelegt wird. Weiterhin kann vorgesehen sein, dass die Toleranzen für den Abstand der Seitenflächen 77 bei der Zentrierausnehmung 73 wie auch der Abstand zwischen der längsten Kante 83 und der Innenfläche 78 der Zentrierausnehmung 73 so gewählt sind, dass zusammen mit dem Zentrierstift 71 sowohl entlang der längsten Kante 83 als auch in horizontaler Richtung quer zur längsten Kante 83 ein Loslager gebildet wird, um eine statische Überbestimmung für die Aufnahmeplatte 70 gegenüber dem Grundgestell 5 zu vermeiden. Ferner kann vorgesehen werden, dass für eine Montage der Aufnahmeplatte 70 auf die Ablagevorrichtung 6 zunächst vorgesehen ist, die Aufnahmeplatte 70 mit ihren Zentrierausnehmungen 72, 73 an den Zentrierstiften 71 einzuhängen und erst anschließend eine Verschraubung der Aufnahmeplatte 70 mit der Ablagevorrichtung 6 vorzusehen. Anschließend können die Werkstückpaletten 7 in nicht näher dargestellter Weise in den Ausnehmungen 84 der Aufnahmeplatte 70, die beispielsweise als Sacklöcher ausgebildet sein können, festgelegt werden.

Die vorstehend detailliert beschriebene Regalspeichereinheit umfasst ein Grundgestell, das nicht wie bisher aus einer Vielzahl von Komponenten und Baugruppen besteht und in aufwendigen Montageschritten montiert werden muss, sondern als ein komplettes Bauteil in einem Gießverfahren hergestellt wird. Dadurch verringert sich der Montageaufwand in der Endmontage erheblich. Der Gusskörper kann durch heutige Gießverfahren mit einer derart hohen Genauigkeit hergestellt werden, dass bei der Montage der Regalspeichereinheit keine Nachbearbeitung des gegossenen Fertigteils erforderlich ist. Das Grundgestell ermöglicht ferner durch Kopplungsmittel und/oder mit Zentriermittel eine ausreichende Positioniergenauigkeit an angrenzende Baugruppen der Automationsanlage. Dadurch wird der Aufwand für das Einrichten und das Vermessen während der Errichtung der Automationsanlage erheblich minimiert. Obwohl das aus Kunststein bestehende Grundgestell aus einem einzigen Fertigteil besteht, lassen sich mit den Einsatzteilen die Ablagevorrichtungen auf unterschiedlichen Höhen flexibel und in Abhängigkeit der einzulagernden Gegenstände anpassen. Das gegossene Grundgestell ist lackierfähig, wodurch sowohl für optische als auch für sicherheitstechnische Belange auf eine zusätzliche Blechverkleidung weitestgehend verzichtet werden kann.

Unter dem Begriff der Automationsanlage wird eine Anlage verstanden, die funktional mit einer Bearbeitungsmaschine, vorzugsweise mit einer Werkzeugmaschine verkettet ist. Die Automationsanlage übernimmt dabei die Aufgabe Werkstücke und/oder Werkzeuge für die Bearbeitungsmaschine in mindestens einer Regalspeichereinheit bereitzustellen und diese automatisch bei Bedarf mit dem Bearbeitungszentrum auszutauschen. Darunter sind Automationsanlagen zu verstehen, die entweder einzelne Werkstücke und/oder Werkstücke, die sich auf Werkzeugpaletten befinden, austauschen können.

Unter dem Begriff der Regalspeichereinheit wird ein Regal für eine Automationsanlage verstanden, das alle erforderlichen Komponenten enthält, um es automatisch mit einer Handhabungseinrichtung oder einem Industrieroboter be- und entladen zu können. Insbesondere umfasst eine Regalspeichereinheit einen standsicheren Regalständer, linke und rechte Regalseitenteile, Ablagevorrichtungen mit jeweils einem oder mehreren Ablageplätzen für Werkzeuge, Werkstücke und/oder Werkstückpaletten. Gegebenenfalls umfasst die Regalspeichereinheit Vorrichtungen für den Transport der Regalspeichereinheit und/oder eine Sichtscheibe und/oder mechanische Schnittstellen zur Anbindung der Regalspeichereinheit an weiteren Baugruppen der Automationsanlage und/oder eine Blechverkleidung an der Oberseite.

Unter dem Begriff des Grundgestells wird eine Konstruktion verstanden, die die Regalseitenteile und den Regalständer umfasst, wobei der Regalständer diejenige Baugruppe bezeichnet, die die Gewichtskraft der Regalspeichereinheit trägt. Der Regalständer kann beispielsweise mit zusätzlichen Standfüßen auf dem Boden stehen und/oder über Verbindungselemente mit einer weiteren, an die Regalspeichereinheit angrenzende, Baugruppe verbunden sein.

Unter dem Begriff Kunststein wird insbesondere ein mineralisch gebundener oder polymergebundener Werkstoff mit mineralischen Zuschlägen verstanden, dessen Formgebung durch ein Gießverfahren entsteht. Dazu zählen beispielsweise zementhaltige Betonwerkstoffe oder harzgebundene Betonwerkstoffe, wie Mineralguss (Polymerbeton).

Unter dem Begriff der schwimmenden Lagerung wird eine Lagerung verstanden, die in mindestens einer Achsrichtung ein oder mehrere Loslager aufweist. Die Ablagevorrichtungen 6 sind längs der Längsachse 56 verschieblich und damit schwimmend an den Regalseitenwänden 10 gelagert. Hierdurch wird eine Einleitung von Zugkräften von der Ablagevorrichtung 6 auf die Regalseitenteile 10, die aufgrund einer Durchbiegung der Ablagevorrichtung 6 entstehen könnten, vermieden.

**Bezugszeichenliste**

| | | | |
|---|---|---|---|
| 1 | Bearbeitungsmaschine | 43 | transparente Sichtscheibe |
| 2 | Schleuseneinrichtung | 44 | größte Außenseitenfläche |
| 3 | Automationsanlage | 45 | längerer L-Schenkel |
| 4 | Regalspeichereinheit | 46 | Außenrückfläche |
| 5 | Grundgestell | 47 | |
| 6 | Ablagevorrichtung | 48 | |
| 7 | Werkstückpalette | 49 | |
| 8 | Werkstück | 50 | Einsatzteil |
| 9 | Oberfläche | 51 | Horizontalrichtung |
| 10 | Regalseitenteil | 52 | erste Teilung |
| 11 | Endbereich | 53 | Vertikalrichtung |
| 12 | Verbindungsplatte | 54 | zweite Teilung |
| 13 | | 55 | Innengewinde |
| 14 | Regalständer | 56 | Längsachse |
| 15 | Unterseite | 57 | Stützstab |
| 16 | Standblock | 58 | Maschinenschrauben |
| 17 | Oberseite | 59 | längste Kante |
| 18 | Schutzabdeckung | 60 | Blechteil |
| 19 | | 61 | Mittelachse |
| 20 | vordere Schmalfläche | 62 | Unterseite |
| 21 | Stirnfläche | 63 | Verstärkungsprofil |
| 22 | Vorsprung | 64 | Trägerplatte |
| 23 | Oberfläche | 65 | größte Oberfläche |
| 24 | Vertiefung | 66 | offene Ausnehmung |
| 25 | längste Kante | 67 | geschlossene Ausnehmung |
| 26 | Rückseite | 68 | Gewindebuchse |
| 27 | Stützplatte | 69 | |
| 28 | | 70 | Aufnahmeplatte |
| 29 | | 71 | Zentrierstift |
| 30 | Verbreiterung | 72 | Zentrierausnehmung |
| 31 | Innenrückfläche | 73 | Zentrierausnehmung |
| 32 | Schrägfläche | 74 | größte Oberfläche |
| 33 | größte Innenseitenfläche | 75 | Unterseite |
| 34 | längste Kante | 76 | Oberseite |
| 35 | Schrägfläche | 77 | Seitenfläche |
| 36 | kürzerer L-Schenkel | 78 | Innenfläche |
| 37 | Wandstärke | 79 | Schaftabschnitt |
| 38 | Wandstärke | 80 | Ringbund |
| 39 | mittlere Stützplatte | 81 | oberer Endbereich |
| 40 | obere Stützplatte | 82 | Maschinenschraube |
| 41 | oberer Endbereich | 83 | längste Kante |
| 42 | Ausnehmung | 84 | Ausnehmung |

## Patentansprüche

1. Regalspeichereinheit zur Verwendung in einer Automationsanlage (3) für eine Speicherung von Werkstücken (8) und/oder Werkstückpaletten (7) und/oder Werkzeugen, mit einem Grundgestell (5), das einen Regalständer (14) und zwei beabstandet zueinander angeordnete Regalseitenteile (10) umfasst, wobei einander zugewandte Oberflächen (33) der Regalseitenteile (10) mit Schnittstellen (50) zur Anbringung von Ablagevorrichtungen (6) ausgebildet sind, wobei das Grundgestell (5) als einstückiger Gusskörper aus Kunststein hergestellt ist und wobei die Schnittstellen (50) als separat ausgebildete Einsatzteile stoffschlüssig in den einander zugewandten Oberflächen (33) der Regalseitenteile (10) aufgenommen sind.

2. Regalspeichereinheit nach Anspruch 1, **dadurch gekennzeichnet, dass** der Kunststein ein zementhaltiger oder harzgebundener Beton ist und/oder eine lackierfähige Oberfläche aufweist.

3. Regalspeichereinheit nach Anspruch 1 oder 2, **dadurch gekennzeichnet, dass** die, insbesondere zu Einsatzteilgruppen zusammengefassten, Einsatzteile (50) als Buchsen, insbesondere als Gewindebuchsen, zur Aufnahme von Stützstäben (57) ausgebildet sind.

4. Regalspeichereinheit nach Anspruch 3, **dadurch gekennzeichnet, dass** Einsatzteile (50) mit Stützstäben (57) versehen sind, die jeweils in Richtung des gegenüberliegenden Regalseitenteils (10) abragen, und dass eine zwischen den Regalseitenteilen (10) aufgenommene Ablagevorrichtung (6) auf wenigstens drei Stützstäben (57) aufliegt.

5. Regalspeichereinheit nach Anspruch 4, **dadurch gekennzeichnet, dass** die Ablagevorrichtung (6) zwischen den einander gegenüberliegenden Regalseitenteilen (10) schiebebeweglich, insbesondere mit genau einem translatorischen Bewegungsfreiheitsgrad, auf den Stützstäben (57) aufliegt und/oder dass die Ablagevorrichtung (6) wenigstens einen Stützstab (57) formschlüssig umgibt, wobei dieser Stützstab (57) als Führungsstab für eine lineare Führung der Ablagevorrichtung (6) ausgebildet ist.

6. Regalspeichereinheit nach Anspruch 4 oder 5, **dadurch gekennzeichnet, dass** die Ablagevorrichtung (6) als prismatisches Profilteil, vorzugsweise als Kunststoffextrusionsprofil, besonders bevorzugt als Aluminiumstrangpressprofil, insbesondere als Stahlblechprofilteil, mit einem längs des Abstands der Regalseitenteile (10) konstanten Querschnitt ausgebildet ist und jeweils endseitig mit einer dem Regalseitenteil (10) gegenüberliegend angeordneten Trägerplatte (64) versehen ist, die Ausnehmungen für eine Kopplung mit den Stützstäben (57) umfasst.

7. Regalspeichereinheit nach Anspruch 4, 5 oder 6, **dadurch gekennzeichnet, dass** auf einer Oberseite (9) der Ablagevorrichtung (6) eine Aufnahmeplatte (70) angeordnet ist, die eine Vielzahl von Ausnehmungen (84) zur Festlegung von Werkstückpaletten (7) umfasst und die wenigstens eine Zentrierausnehmung (72, 73) für einen Eingriff eines Zentrierelements (71) aufweist, wobei das Zentrierelement (71) am Grundgestell (5) festgelegt ist und eine Position der Aufnahmeplatte (70) gegenüber dem Grundgestell (5) bestimmt.

8. Regalspeichereinheit nach einem der vorhergehenden Ansprüche, **dadurch gekennzeichnet, dass** der Regalständer (14) jeweils unterhalb der Regalseitenteile (10) angeordnete Standblöcke (16) umfasst und dass zwischen einer von den Regalseitenteilen (10) begrenzten Regalausnehmung und einer von den Standblöcken (16) begrenzten Standblockausnehmung eine Verbindungsplatte (12) ausgebildet ist und/oder dass die Standblöcke (16) an einander zugewandten Oberflächen (23) jeweils, insbesondere spiegelbildlich angeordnete, nutartige Vertiefungen (24) aufweisen, die zum Eingriff von Gabelstaplerzinken ausgebildet sind, um einen Gabelstaplertransport der kompletten Regalspeichereinheit (4) zu ermöglichen.

9. Regalspeichereinheit nach Anspruch 8, **dadurch gekennzeichnet, dass** vordere Schmalflächen (20) der Regalseitenteile (10) in einer gemeinsamen Schnittstellenebene mit Stirnflächen (21) der Standblöcke (16) angeordnet sind und dass die vorderen Schmalflächen (20) und/oder die Stirnflächen (21) mit Kopplungsmitteln und/oder mit Zentriermitteln (22), insbesondere mit Vorsprüngen und/oder Vertiefungen, versehen sind, die für eine mechanische Verbindung mit einer Maschinenkomponente ausgebildet sind.

10. Regalspeichereinheit nach Anspruch 8 oder 9, **dadurch gekennzeichnet, dass** die Standblöcke (16) und/oder die Regalseitenteile (10) rückseitig mit einer, insbesondere leistenartig ausgebildeten, Stützplatte (27, 39, 40) verbunden sind.

11. Regalspeichereinheit nach Anspruch 10, **dadurch gekennzeichnet, dass** die Regalseitenteile (10) angrenzend an die Standblöcke (16) mit einer ersten Stützplatte (39) und an einem von den Standblöcken (16) abgewandten Endbereich (41) mit einer zweiten Stützplatte (40) verbunden sind und dass zwischen den beiden Stützplatten (39, 40) eine, vorzugsweise rechteckige, insbesondere mit einer transparenten Sichtscheibe (43) verschlossene, Ausnehmung (42) ausgebildet ist.

12. Regalspeichereinheit nach einem der Ansprüche 8 bis 11, **dadurch gekennzeichnet, dass** die Regalseitenteile (10) an einem den Standblöcken (16) zugewandten Endbereich (11) eine keilförmige Verbreiterung (30) aufweisen, die sich von einer vorderen Schmalfläche (20) des jeweiligen Regalseitenteils (10) bis zu einer Innenrückfläche (31) des Regalseitenteils (10) erstreckt.

13. Regalspeichereinheit nach einem der vorhergehenden Ansprüche, **dadurch gekennzeichnet, dass** die Regalseitenteile (10) als prismatische Profilkörper mit L-förmigem Querschnitt ausgebildet sind, wobei eine größte Außenseitenfläche (44) des Regalseitenteils (10) und eine daran angrenzende Außenrückfläche (46) des Regalseitenteils (10) rechtwinklig zueinander ausgerichtet sind und/oder wobei eine größte Innenseitenfläche (33) des Regalseitenteils (10) und eine daran angrenzende Innenrückfläche (31) des Regalseitenteils (10) rechtwinklig oder stumpfwinklig zueinander ausgerichtet sind.

14. Regalspeichereinheit nach Anspruch 13, **dadurch gekennzeichnet, dass** die Innenrückfläche (31) des Regalseitenteils (10) mit einer in Richtung eines Endbereichs eines kürzeren L-Schenkels (36) verlaufenden Verjüngung, insbesondere einer Schrägfläche (35), versehen ist.

15. Automationsanlage zum automatischen Wechseln von Werkstücken (8) und/oder Werkstückpaletten (7) und/oder Werkzeugen an mindestens einer Bearbeitungsmaschine (1), insbesondere an einer Werkzeugmaschine, mit einem Manipulator, insbesondere einen Industrieroboter, und mit zumindest einer Regalspeichereinheit (4) nach einem der vorhergehenden Ansprüche.

## Claims

1. Rack storage unit for use in an automation system (3) for a storage of workpieces (8) and/or workpiece pallets (7) and/or tools, comprising a base frame (5) with a rack stand (14) and two rack side parts (10) arranged at a distance from one another, wherein surfaces (33) of the rack side parts (10) facing each other are provided with interfaces (50) for mounting placement devices (6), wherein the base frame (5) is produced as a one-piece cast body from artificial stone and wherein the interfaces (50) are held by adhesive force as separately formed insert parts in the surfaces (33) of the rack side parts (10) facing each other.

2. Rack storage unit according to claim 1, **characterised in that** the artificial stone is a cement-containing or resin-bonded concrete and/or has a paintable surface.

3. Rack storage unit according to claim 1 or 2, **characterised in that** the insert parts (50), which are combined to form insert part groups in particular, are designed as bushings, in particular threaded bushings, for the accommodation of support bars (57).

4. Rack storage unit according to claim 3, **characterised in that** insert parts (50) are provided with support bars (57) which extend towards the opposite rack side part (10), and **in that** a placement device (6) accommodated between the rack side parts (10) lies on at least three support bars (57).

5. Rack storage unit according to claim 4, **characterised in that** the placement device (6) lies between the opposite rack side parts (10) on the support bars (57) in a slidable manner, in particular with precisely one translational degree of freedom, and/or **in that** the placement device (6) positively encloses at least one support bar (57), which is designed as a guide bar for a linear guidance of the placement device (6).

6. Rack storage unit according to claim 4 or 5, **characterised in that** the placement device (6) is designed as a prismatic profiled part, preferably an extruded plastic profile part and particularly preferably an aluminium extrusion part, in particular a sheet steel profile part, with a cross-section which is constant along the distance of the rack side parts (10), and **in that** it is at the ends provided with a support plate (64) each arranged opposite the rack side part (10) and having recesses for a coupling to the support bars (57).

7. Rack storage unit according to claim 4, 5 or 6, **characterised in that** a location plate (70) having a plurality of recesses (84) for the location of workpiece pallets (7) and at least one centring recess (72, 73) for the engagement of a centring element (71) is provided on a top side (9) of the placement device (70), wherein the centring element (71) is fixed to the base frame (5) and determines a position of the location plate (70) relative to the base frame (5).

8. Rack storage unit according to any of the preceding claims, **characterised in that** each rack stand (14) comprises stand blocks (16) located below the rack side parts (10), and **in that** a connecting plate (12) is formed between a rack recess bounded by the rack side parts (10) and a stand block recess bounded by the stand blocks (16), and/or **in that** the stand blocks (16), comprise on surfaces (23) facing each other, groove-like recesses (24) which are in particular arranged in a mirror image fashion and designed for the engagement of forklift prongs for facilitating a transport of the complete rack storage unit (4) by forklift truck.

9. Rack storage unit according to claim 8, **characterised in that** front narrow surfaces (20) of the rack side parts (10) are located in a common interface plane with end faces (21) of the stand blocks (16), and **in that** the front narrow surfaces (20) and/or the end faces (21) are provided with coupling means and/or centring means (22), in particular with projections and/or recesses, which are designed for a mechanical connection to a machine component.

10. Rack storage unit according to claim 8 or 9, **characterised in that** the stand blocks (16) and/or the rack side parts (10) are joined on the back to a support plate (27, 39, 40), which is strip-shaped in particular.

11. Rack storage unit according to claim 10, **characterised in that** the rack side parts (10) are joined to a first support plate (39) adjoining the stand blocks (16) and to a second support plate (40) in an end region (41) remote from the stand blocks (16), and **in that** a preferably rectangular recess (42), in particular covered by a transparent viewing window (43), is formed between the two support plates (39, 40).

12. Rack storage unit according to any of claims 8 to 11, **characterised in that** the rack side parts (10) have in an end region (11) facing the stand blocks (16) a wedge-shaped widening (30) extending from a front narrow surface (20) of the respective rack side part (10) to an internal rear surface (31) of the rack side part (10).

13. Rack storage unit according to any of the preceding claims, **characterised in that** the rack side parts (10) are designed as prismatic profiled parts with an L-shaped cross-section, wherein a largest external side surface (44) of the rack side part (10) and an adjoining external rear surface (46) of the rack side part (10) are oriented at right angles to one another and/or wherein a largest internal side surface (33) of the rack side part (10) and an adjoining internal rear surface (31) of the rack side part (10) are oriented at right angles or at an obtuse angle to one another.

14. Rack storage unit according to claim 13, **characterised in that** the internal rear surface (31) of the rack side part (10) is provided with a taper extending towards an end region of a shorter L-leg (36), in particular with a sloping surface (35).

15. Automation system for the automatic change of workpieces (8) and/or workpiece pallets (7) and/or tools on at least one machining unit (1), in particular a machine tool, comprising a manipulator, in particular an industrial robot, and at least one rack storage unit (4) according to any of the preceding claims.

## Revendications

1. Bloc d'étagères de rangement pour l'utilisation dans un système d'automation (3) pour un rangement de pièces à usiner (8) et/ou de palettes de pièces à usiner (7) et/ou d'outils, avec un bâti de base (5) qui comporte un montant d'étagère (14) et deux parties latérales d'étagère (10) agencées à distance l'une de l'autre, dans lequel des surfaces (33) tournées l'une vers l'autre des parties latérales d'étagère (10) sont réalisées avec des interfaces (50) pour le montage de dispositifs de dépôt (6), dans lequel le bâti de base (5) est fabriqué en tant que corps coulé d'un seul tenant en pierre artificielle et dans lequel les interfaces (50) sont reçues par liaison de matière en tant que parties d'insert réalisées séparément dans les surfaces (33) tournées les unes vers les autres des parties latérales d'étagère (10).

2. Bloc d'étagères de rangement selon la revendication 1, **caractérisé en ce que** la pierre artificielle est un béton contenant du ciment ou lié par résine et/ou présente une surface pouvant être vernie.

3. Bloc d'étagères de rangement selon la revendication 1 ou 2, **caractérisé en ce que** les parties d'insert (50), réunies en particulier en groupes de partie d'insert, sont réalisées en tant que douilles, en particulier en tant que douilles filetées, pour la réception de barres d'appui (57).

4. Bloc d'étagères de rangement selon la revendication 3, **caractérisé en ce que** des parties d'insert (50) sont pourvues de barres d'appui (57) qui dépassent respectivement en direction de la partie latérale d'étagère (10) opposée, et qu'un dispositif de dépôt (6) reçu entre les parties latérales d'étagère (10) repose sur au moins trois barres d'appui (57).

5. Bloc d'étagères de rangement selon la revendication 4, **caractérisé en ce que** le dispositif de dépôt (6) repose entre les parties latérales d'étagère (10) opposées l'une à l'autre de manière mobile en coulissement, en particulier avec précisément un degré de liberté de mouvement translatoire, sur les barres d'appui (57) et/ou que le dispositif de dépôt (6) entoure par complémentarité de forme au moins une barre d'appui (57), dans lequel cette barre d'appui (57) est réalisée en tant que barre de guidage pour un guidage linéaire du dispositif de dépôt (6).

6. Bloc d'étagères de rangement selon la revendication 4 ou 5, **caractérisé en ce que** le dispositif de dépôt (6) est réalisé en tant que partie profilée prismatique, de préférence en tant que profil d'extrusion en matière plastique, de manière particulièrement préférée en tant que profil extrudé en aluminium, en particulier en tant que partie profilée de tôle d'acier, avec une section transversale constante le long de la distance des parties latérales d'étagère (10) et est pourvu respectivement côté extrémité d'une plaque de support (64) agencée à l'opposé de la partie latérale d'étagère (10), qui comporte des évidements pour un couplage avec les barres d'appui (57).

7. Bloc d'étagères de rangement selon la revendication 4, 5 ou 6, **caractérisé en ce qu'**une plaque de réception (70) est agencée sur un côté supérieur (9) du dispositif de dépôt (6), qui comporte une pluralité d'évidements (84) pour la fixation de palettes de pièce à usiner (7) et qui présente au moins un évidement de centrage (72, 73) pour une mise en prise avec un élément de centrage (71), dans lequel l'élément de centrage (71) est fixé au bâti de base (5) et détermine une position de la plaque de réception (70) par rapport au bâti de base (5).

8. Bloc d'étagères de rangement selon l'une quelconque des revendications précédentes, **caractérisé en ce que** le montant d'étagère (14) comporte des blocs de montant (16) agencés respectivement sous les parties latérales d'étagère (10) et qu'une plaque de liaison (12) est réalisée entre un évidement d'étagère délimité par les parties latérales d'étagère (10) et un évidement de bloc de montant délimité par les blocs de montant (16) et/ou que les blocs de montant (16) présentent, au niveau de surfaces tournées les unes vers les autres (23), respectivement des cavités (24) de type nervure, agencées en particulier de manière réfléchie, qui sont réalisées pour la mise en prise avec des dents de chariot élévateur à fourche afin de permettre un transport par chariot élévateur à fourche du bloc d'étagères de rangement (4) complet.

9. Bloc d'étagères de rangement selon la revendication 8, **caractérisé en ce que** des surfaces étroites avant (20) des parties latérales d'étagère (10) sont agencées dans un plan d'interface commun avec des surfaces avant (21) des blocs de montant (16) et que les surfaces étroites avant (20) et/ou les surfaces avant (21) sont pourvues de moyens de couplage et/ou de moyens de centrage (22), en particulier de saillies et/ou cavités, qui sont réalisés pour une liaison mécanique avec un composant de machine.

10. Bloc d'étagères de rangement selon la revendication 8 ou 9, **caractérisé en ce que** les blocs de montant (16) et/ou les parties latérales d'étagère (10) sont raccordées côté arrière à une plaque d'appui (27, 39, 40) réalisée en particulier comme une baguette.

11. Bloc d'étagères de rangement selon la revendication 10, **caractérisé en ce que** les parties latérales d'étagère (10) sont raccordées de manière contiguë aux blocs de montant (16) avec une première plaque d'appui (39) et à une zone d'extrémité (41) éloignée des blocs de montant (16) à une seconde plaque d'appui (40) et qu'un évidement (42), de préférence rectangulaire, en particulier fermé avec une vitre (43) transparente, est réalisé entre les deux plaques d'appui (39, 40).

12. Bloc d'étagères de rangement selon l'une quelconque des revendications 8 à 11, **caractérisé en ce que** les parties latérales d'étagère (10) présentent, au niveau d'une zone d'extrémité (11) tournée vers les blocs de montant (16), un élargissement (30) en forme de coin qui s'étend d'une surface étroite avant (20) de la partie latérale d'étagère (10) respective jusqu'à une surface arrière intérieure (31) de la partie latérale d'étagère (10).

13. Bloc d'étagères de rangement selon l'une quelconque des revendications précédentes, **caractérisé en ce que** les parties latérales d'étagère (10) sont réalisées en tant que corps profilé prismatique avec une section transversale en forme de L, dans lequel une surface latérale extérieure (44) la plus grande de la partie latérale d'étagère (10) et une surface arrière extérieure (46) contiguë à celle-ci de la partie latérale d'étagère (10) sont orientées à angle droit l'une par rapport à l'autre et/ou dans lequel une surface latérale intérieure (33) la plus grande de la partie latérale d'étagère (10) et une surface arrière intérieure (31) contiguë à celle-ci de la partie latérale d'étagère (10) sont orientées à angle droit ou obtus l'une par rapport à l'autre.

14. Bloc d'étagères de rangement selon la revendication 13, **caractérisé en ce que** la surface arrière intérieure (31) de la partie latérale d'étagère (10) est pourvue d'un rétrécissement s'étendant en direction d'une zone d'extrémité d'une branche en L (36) plus courte, en particulier d'une surface oblique (35).

15. Système d'automation pour le changement automatique de pièces à usiner (8) et/ou de palettes de pièce à usiner (7) et/ou d'outils sur au moins une machine d'usinage (1), en particulier sur une machine-outil, avec un manipulateur, en particulier un robot industriel, et avec au moins un bloc d'étagères de rangement (4) selon l'une quelconque des revendications précédentes.
